**Europäisches Patentamt**

**European Patent Office**

**Office européen des brevets**

(19)

(11) Numéro de publication : **0 479 649 A1**

## (12) DEMANDE DE BREVET EUROPEEN

(21) Numéro de dépôt : **91402565.5**

(22) Date de dépôt : **25.09.91**

(51) Int. Cl.$^5$ : **G01S 7/48**

(30) Priorité : **01.10.90 FR 9012077**

(43) Date de publication de la demande :
**08.04.92 Bulletin 92/15**

(84) Etats contractants désignés :
**DE ES GB IT**

(71) Demandeur : **Société d'optique, électronique et mécanique - SOPELEM -**
**19, Boulevard Ney**
**F-75018 Paris (FR)**

(72) Inventeur : **Breteau, Pierre**
**3, Impasse Doussineau**
**F-92270 Bois Colombes (FR)**

(74) Mandataire : **Phélip, Bruno et al**
**c/o Cabinet Harlé & Phélip 21, rue de La Rochefoucauld**
**F-75009 Paris (FR)**

(54) **Extraction d'un signal par multiplications successives de trames du signal bruité et application de cette méthode à la télémétrie.**

(57)    Dans le procédé d'extraction d'un signal informatif, se répétant dans le bruit de plusieurs trames de signaux, on traite les signaux de ces différentes trames pour obtenir une trame de sortie dans laquelle apparaît un signal de sortie correspondant audit signal informatif, en effectuant après initialisation de la trame de sortie par un signal prédéterminé une succession d'étapes selon le cycle suivant :
— on traite la trame de sortie pour obtenir une trame de sortie asservie ;
— multiplie de façon homologue la trame de sortie asservie avec une trame de signaux d'entrée, pour obtenir une nouvelle trame de sortie ;
— on reprend le cycle avec une nouvelle trame de signaux tant que la trame de sortie n'est pas suffisamment exploitable.
Le dispositif permet la mise en oeuvre de ce procédé, notamment dans le cadre de la télémétrie laser.

FIG.4

EP 0 479 649 A1

La présente invention est relative à un procédé d'extraction d'un signal répétitif noyé dans du bruit, ainsi qu'à un dispositif permettant sa mise en oeuvre. Ce procédé et ce dispositif sont destinés à des applications très diverses : radar, sonar, télécommunications, domaine médical, géologie etc... Ils trouvent également applications dans le domaine de la télémétrie laser où des extractions signal/bruit s'avèrent indispensables étant donné la faiblesse des signaux lumineux de retour. La présente invention est donc également relative à l'application de ce procédé et/ou de ce dispositif en particulier à la télémétrie laser, ainsi qu'à un télèmètre comportant un tel dispositif.

Des procédés et dispositifs d'extraction d'un signal périodique à large bande, à fréquence connue et pouvant avoir une forme temporelle quelconque (carrée, gaussienne, sinusoïdale, triangulaire, rectangulaire, etc...) sont connus depuis longtemps. On utilise notamment à cet effet la technique de l'accumulation additive, décrite dans la demande de brevet WO 88-05.922 dans une application à la télémétrie laser. On utilise également la technique de l'accumulation additive dite à trames corrélées, qui permet d'obtenir une amélioration signal/bruit plus importante que celle obtenue avec la technique de l'accumulation additive simple. Néanmoins, cette deuxième technique nécessite, d'une part, la connaissance initiale, en plus de la fréquence, de la forme du signal que l'on reçoit, et, d'autre part, un nombre beaucoup plus important d'opérations.

La présente invention propose pour sa part un procédé d'extraction signal/bruit d'un type nouveau, dont les performances sont bien meilleures que celles des procédés d'extraction classiques. En outre, le signal y est extrait beaucoup plus rapidement que par la méthode classique d'accumulation additive dite à trames corrélées, sans nécessiter pour autant la puissance de traitement d'un corrélateur.

Plus particulièrement, l'invention propose de traiter les signaux successifs à débruiter en les multipliant les uns par les autres. Or, jusqu'à présent une telle extraction par multiplication semblait impossible puisque le fait d'effectuer des multiplications successives en grand nombre conduit à une instabilité naturelle.

De façon surprenante, la société demanderesse a constaté qu'une extraction signal/bruit était réalisable par multiplication, dès lors que cette multiplication était asservie de façon à rester dans une gamme non divergente.

La présente invention a donc pour objet un procédé d'extraction d'un signal informatif répétitif noyé dans du bruit, dans lequel on accumule plusieurs trames de signaux incidents et l'on traite les signaux de ces différentes trames pour obtenir une trame de sortie dans laquelle apparaît un signal de sortie destiné à être exploité et correspondant audit signal informatif, caractérisé en ce que l'on multiplie successivement de façon homologue, après éventuellement traitement, une première trame incidente avec la trame incidente précédente, puis, si nécessaire, chacune des trames incidentes suivantes avec la trame résultat de la multiplication antérieure, jusqu'à obtenir une trame résultat suffisamment exploitable pour pouvoir servir de trame de sortie, les trames résultats successives étant observées et éventuellement traitées pour obtenir un signal de correction introduit dans la chaîne de traitement afin d'asservir le niveau moyen du signal de ces trames résultats à une valeur de consigne du signal.

Avantageusement, on asservit une trame résultat en lui additionnant une polarisation continue stabilisant la valeur moyenne du signal résultat autour d'une valeur de consigne du signal et l'on multiplie la trame de sortie asservie ainsi obtenue à une nouvelle trame incidente pour obtenir une nouvelle trame résultat.

De préférence, la polarisation continue est de la forme :

$$U(t) \ = \ \alpha \times [V_0 - V_m(t)]$$

où t est l'abcisse des trames, $V_m(t)$ est la valeur moyenne du signal résultat, $V_0$ est la valeur de consigne, $\alpha$ est un coefficient d'asservissement.

L'invention a encore pour objet un dispositif pour la mise en oeuvre de ce procédé, caractérisé en ce qu'il comporte un circuit multiplieur dont une première entrée reçoit les trames de signaux à traiter, une mémoire de trame recevant les trames de signaux en sortie du multiplieur, un circuit d'asservissement recevant les trames de signaux de la mémoire de trame et renvoyant ces trames de signaux asservies sur une deuxième entrée du multiplieur.

Ce dispositif comprend avantageusement un circuit contrôleur gérant le synchronisme des opérations ; ce circuit contrôleur délivre de façon préférentielle à la fin de chaque cycle le rang dans la trame de sortie de l'échantillon de signal de plus forte amplitude.

De façon avantageuse encore, le circuit d'asservissement comporte un filtre moyenneur et un amplificateur différentiel.

Le dispositif comporte également de façon préférentielle un circuit transformateur changeant la composante continue des trames de signaux d'entrée en une valeur de consigne, ce circuit transformateur étant relié à la première entrée du circuit multiplieur.

D'autres objets encore de l'invention sont l'application de ce procédé et/ou de ce dispositif au traitement de signaux de réception en télémétrie laser ainsi qu'un télèmètre comportant une source d'émission d'impulsions laser reliée à des moyens générateurs d'impulsion, des moyens de réception desdites impulsions après réflexion de celles-ci sur une cible, des moyens de traitement desdites impulsions reçues permettant le comptage du temps de propagation entre l'émission et la réception d'une impulsion, caractérisé en ce que lesdits moyens de traitement comportent un dispositif du type précédemment décrit.

Bien entendu, le procédé et le dispositif conformes à l'invention peuvent avoir d'autres applications. Ils peuvent être par exemple utilisés en échotomographie, notamment sur des dispositifs auto-directeurs.

La description de l'invention qui suit est purement illustrative et non limitative. Elle est faite en regard des dessins annexés. Sur ces dessins :

– la Figure 1 illustre l'organisation d'une séquence du procédé conforme à l'invention ;

– la Figure 2 est un schéma bloc illustrant schématiquement le traitement de trame d'une séquence du procédé conforme à l'invention ;

– la Figure 3 est un schéma bloc qui illustre le procédé et le dispositif conformes à l'invention selon un mode de mise en oeuvre et de réalisation ;

– la Figure 4 est un schéma fonctionnel d'un mode de réalisation d'un dispositif permettant la mise en oeuvre du procédé conforme à l'invention ;

– la Figure 5 est un diagramme temporel qui représente l'allure du signal d'entrée que reçoit le dispositif de la Figure 4 ;

– la Figure 6 est un schéma fonctionnel d'un autre mode de réalisation d'un dispositif permettant la mise en oeuvre du procédé conforme à l'invention ;

– la Figure 7 représente de façon plus détaillée le dispositif de la Figure 4.

– la Figure 8, enfin, est un schéma bloc illustrant schématiquement un dispositif télémètrique équipé du dispositif de la Figure 4.

Le procédé et le dispositif conformes à l'invention sont plus particulièrement destinés aux systèmes possédant un émetteur de signaux répétitifs et un récepteur devant extraire et exploiter une réponse en retour, synchrone de l'émission, cette réponse étant très souvent noyée dans le bruit.

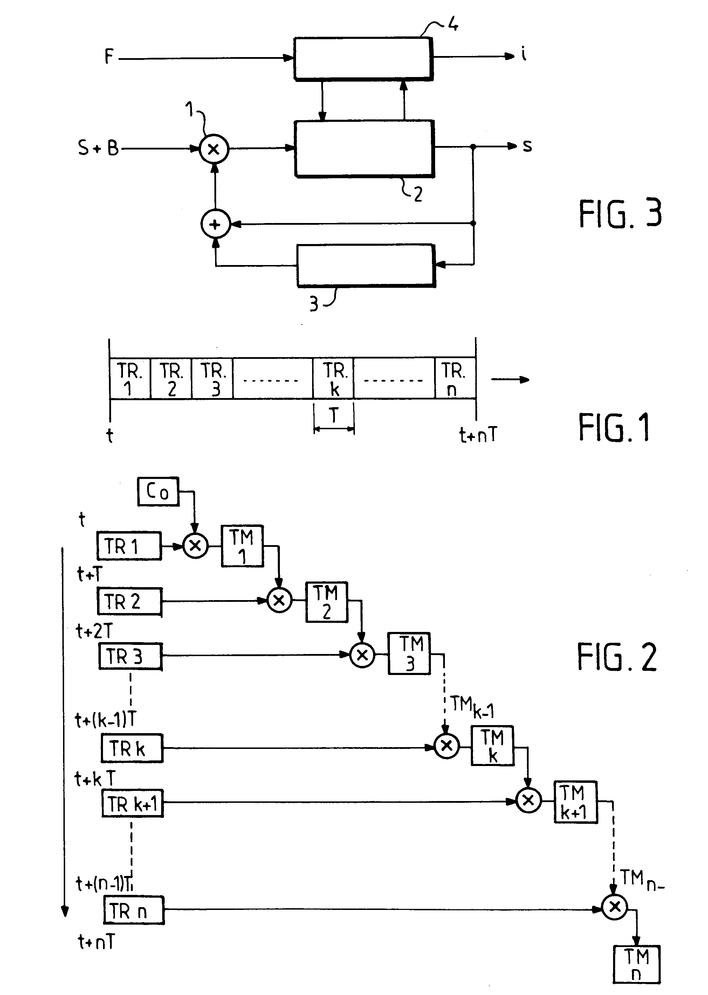

Ainsi que cela a été illustré sur la Figure 1, le fonctionnement du dispositif est organisé en séquences, à l'issue desquelles le signal reçu, débruité, est disponible pour l'exploitation sous forme de trames de sortie. On appelle trame le signal variable issu du récepteur pendant une durée inférieure ou égale à la période T de la répétition du signal émetteur, où T est par exemple donné par T=1/F, F étant la fréquence de répétition dudit signal à extraire. Chaque séquence comprend n trames $TR_k$, le nombre n de trames étant choisi pour obtenir l'amélioration S/B (Signal/Bruit) désirée.

Ainsi qu'on l'a illustré plus spécifiquement sur la Figure 2, le procédé consiste, dans son principe, à multiplier la trame incidente $TR_k$ avec la trame $TM_{k-1}$ résultant de la précédente opération de multiplication, afin d'obtenir une nouvelle trame résultat $TM_k$. La multiplication entre deux trames s'effectue par multiplication de signaux correspondant à des instants homologues dans leur trame respective, c'est-à-dire sans décalage de temps par rapport au début de leurs trames respectives. Dans le cas de signaux numériques, cette multiplication correspond à une multiplication d'échantillons de même rang. La dernière trame de multiplication, référencée par $TM_n$, porte le signal débruité et est exploitable par le système.

Le principe du procédé et du dispositif permettant la mise en oeuvre de ce procédé a encore été illustré sur la Figure 3. Le signal S+B est envoyé sur un circuit multiplieur 1 et stocké dans une mémoire de trame 2, par exemple de type FIFO, couvrant une durée T. La valeur moyenne $V_m$ (t) du signal de sortie S(t) est stabilisée par l'intermédiaire d'un asservissement 3. En outre, la mémoire de trame 2 est associée à un circuit contrôleur 4 qui permet, entre autres choses, de surveiller le niveau crête des échantillons $TM_k$ et d'arrêter le processus, avant la fin de la séquence correspondante, dès que les signaux s'approchent de la saturation des circuits (logiques ou analogiques).

La mémoire de trame 2 et le multiplieur 1 peuvent être indifféremment de technologie analogique ou numérique. La mémoire de trame 2 est initialisée, ainsi que cela a été illustré sur la figure 2, avec l'élément neutre Co du multiplieur (Co = 1, par exemple en numérique). On réalise donc la multiplication synchrone de points homologues des deux trames successives, jusqu'à ce que le signal de sortie S atteigne une valeur suffisante au-dessus du niveau du bruit B pour être exploitée.

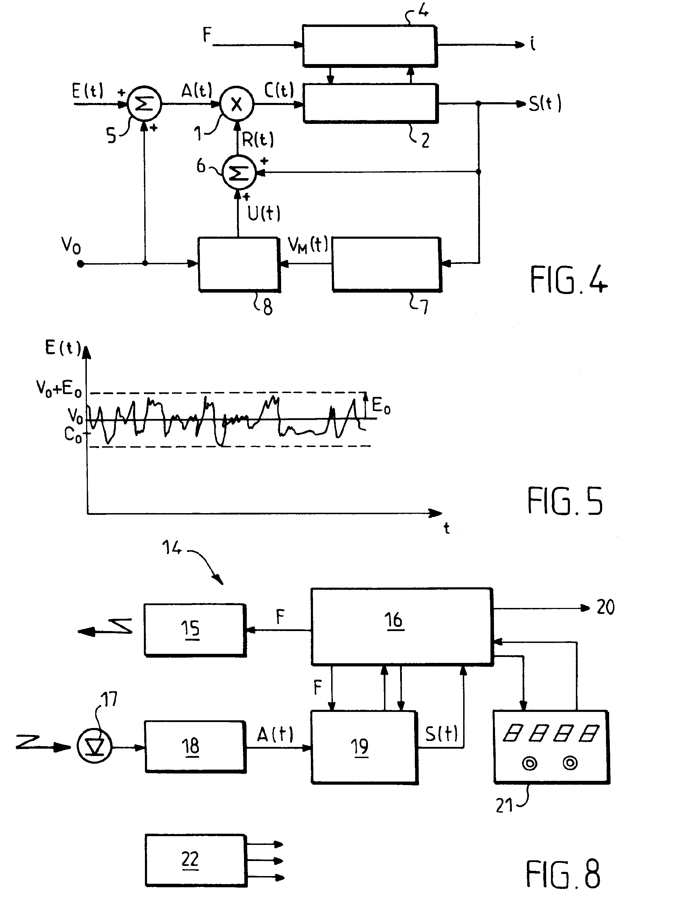

En se référant plus spécifiquement à la figure 4, reprenant de façon plus complète la figure 3 et représentant le schéma fonctionnel d'un dispositif permettant la mise en oeuvre du procédé conforme à l'invention, on voit qu'un asservissement peut être réalisé en additionnant au signal de sortie S(t) une polarisation continue U(t) qui permet de corriger toute déviation significative de la valeur de consigne $V_0$ (référence de polarisation). Le multiplieur 1 reçoit donc en entrée un signal A(t) égal à :

$$A(t) = E(t) + V_0$$

où E(t) est le signal reçu et est additionné à la référence $V_0$ de polarisation par l'intermédiaire d'un circuit additionneur 5, le circuit multiplieur 1 recevant également en entrée un signal :

$$R(t) = S(t) + U(t)$$

avec $U(t) = \alpha \times [V_0 - V_m(t)]$

L'addition entre le signal de sortie $S(t)$ et le signal $U(t)$ de polarisation continue est réalisée par l'intermédiaire d'un circuit additionneur 6 ; la valeur moyenne $V_m(t)$ du signal $S(t)$ de sortie est obtenue par l'intermédiaire d'un filtre moyenneur passe-bas 7 ; la valeur $U(t)$, qui permet de corriger toute déviation significative de la consigne $V_0$, est obtenue par un asservissement de polarisation 8.

La tension de consigne $V_0$ est la tension pour laquelle, sans asservissement, le signal est stable. En d'autres termes, c'est la polarisation sur laquelle s'aligne le signal $E(t)$ qui ne fait pas diverger la tension de sortie. Dans la pratique, l'asservissement est toujours nécessaire en raison de l'insuffisance de stabilité, à coût raisonnable, des circuits.

On démontre que $V_0$ est supérieur à $C_0$ et que pour $C_0 = 1$ on a la relation suivante :

$$Vo = \frac{1}{2} \operatorname{Cosh} \left[\log_e(Eo + \sqrt{Eo^2 + 1})\right] + \frac{1}{2.Eo}\left[\log_e(Eo + \sqrt{Eo^2 + 1})\right]$$

où $E_0$ est tel que $V_0 + E_0$ est la valeur de crête du signal $A(t)$ représenté sur la figure 5, $E_0$ étant inférieure à $V_0$.

Le gain signal/bruit croît très rapidement avec le nombre n de trames "accumulées" multiplicativement. A titre d'exemple, pour un bruit de valeur de crête $E_0 = 0,25$, c'est-à-dire une valeur de 1,0018 pour $V_0$, un signal de 0,01, on obtient un gain, pour $n = 1000$ et $\alpha \approx 1$, supérieur à 80 db. On a donné ci-après un tableau (Tableau I) permettant de comparer le nombre d'opérations à effectuer ainsi que l'amélioration du rapport signal/bruit pour respectivement la technique d'accumulation additive, la technique d'accumulation avec corrélation et la technique d'accumulation multiplicative de l'invention, mises en oeuvre, dans le cadre d'un traitement numérique, avec un nombre de 1024 trames, 2048 échantillons par trames et 512 points corrélés par trames dans la technique de corrélation.

## TABLEAU I

| | Nombre d'additions | Nombre de multiplications | Amélioration signal/bruit | |
|---|---|---|---|---|
| | | | décimal | dB |
| Accumulation additive | ~ $1.10^6$ | O | 32 | 39 |
| Accumulation corrélative | ~ $1.10^9$ | $1.10^9$ | 724 | 57 |
| Accumulation multiplicative | ~ $4.10^6$ | ~ $6.10^6$ | $400.10^3$ | 112 |

On constate tout l'intérêt de la technique de l'accumulation multiplicative de l'invention qui permet d'obtenir des résultats d'amélioration bien meilleurs que ceux des techniques classiques, avec un nombre d'opérations beaucoup moins important que celui que nécessite la technique d'accumulation corrélative.

Le circuit contrôleur 4 gère également le synchronisme de tous les éléments du dispositif et délivre le rang i de l'échantillon de plus forte amplitude, c'est-à-dire sa position temporelle dans la trame. Ceci permet, par conséquent, dans le cadre de la télémétrie laser la détermination du temps de trajet effectué par le signal émis pour atteindre le récepteur.

Les circuits électroniques employés peuvent être bien entendu analogiques, digitaux ou mixtes sans limitation de combinaisons. Ils sont réalisables sous des formes technologiquement variées : circuits discrets, monolithiques, ASIC, programmables, CMS (composants montés en surface), hybrides, etc... (liste non limitative incluant aussi les microprocesseurs).

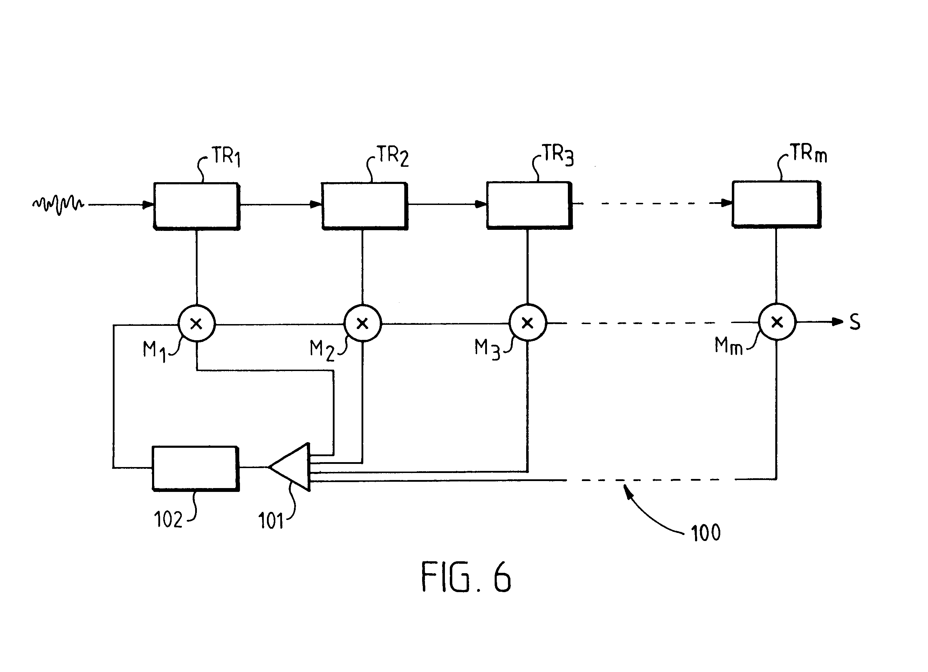

En se référant maintenant à la Figure 6, on voit qu'une variante, référencée par 100 dans son ensemble, du dispositif permettant la mise en oeuvre du procédé conforme à l'invention comprend m registres à décalage référencés par $R_1, R_2, ... R_k, ... R_m$. Les mémoires de ces différents registres $R_k$ ont une capacité leur permettant d'enregistrer une succession de signaux pendant une durée T, T étant la période du signal répétitif. Chacun de ces registres $R_k$ est relié en amont au registre $R_k - 1$ et en aval au registre $R_k + 1$, le registre $R_1$ étant relié, quant à lui en aval au registre $R_2$ et recevant en amont les trames de signaux incidents à traiter. Le registre $R_m$ est relié uniquement en amont au registre $R_m - 1$.

4

Chacun de ces registres $R_k$ est également associé à un multiplicateur, référencé par $M_k$, à l'une des entrées duquel il délivre le signal contenu dans sa mémoire. Chaque multiplicateur $M_k$ est relié en sortie au multiplicateur $M_k + 1$, le multiplicateur $M_m$ envoyant quant à lui un signal résultat S vers un ensemble (non représenté) d'acquisition et d'exploitation. Chacun de ces multiplicateur $M_k$ est en outre relié à l'entrée d'un même multiplicateur 101 en série avec un ensemble d'asservissement 102 dont la sortie renvoie un signal sur la deuxième entrée du multiplicateur $M_1$, la deuxième entrée de chacun des autres multiplicateur $M_k$ étant reliée, ainsi que cela résulte de ce qui précède, au multiplicateur $M_k + 1$.

Le fonctionnement d'un tel dispositif 100 est le suivant. Initialement, les mémoires des différents registres $R_k$ sont toutes vidées. La mémoire du registre R, se remplit lors de la réception par le dispositif 100 de la première trame de signal. A la réception de la deuxième trame de signal, le contenu de la mémoire du registre R, va se décaler sur le registre $R_2$, tandis que la première trame, traitée par l'amplificateur 101 et l'ensemble d'asservissement 102 sera renvoyée sur la deuxième entrée du multiplicateur $M_1$. Lors de la réception par l'ensemble du dispositif 100 et le registre R, de la troisième trame de signaux, le multiplicateur $M_1$ multipliera de façon synchrone, c'est-à-dire homologue, les signaux de la deuxième trame avec ceux de la première trame asservie. La trame de résultat ainsi obtenue sera alors renvoyée sur le multiplicateur $M_2$ et multipliée avec le contenu de la mémoire du registre $R_2$, puis avec le contenu des mémoires vides des registres $R_k$. Tant que la nième trame n'a pas été reçue par le dispositif, le signal résultat S en sortie du multiplicateur $M_m$ sera nécessairement nul, puisqu'à chaque fois la mémmoire d'au moins l'un des registres $R_k$ est sans contenu. Lors de la réception de la ième trame de signal, avec i supérieur à m, le signal de cette ième trame passe dans la mémoire du registre $R_1$, le signal précédemment en mémoire du registre $R_k$ se décalant dans le registre $R_k + 1$, le registre $R_m$ recevant ainsi la (i + m)ième trame de signal, le signal précédemment en mémoire de ce registre $R_m$ se trouvant effacé par l'arrivée de ce dernier signal. Le signal i + m se trouve alors multiplié, au niveau du multiplicateur $M_m$, avec le signal résultat de la multiplication par l'ensemble des multiplicateurs $M_k$ des signaux en mémoire des registres $R_k$ et du signal résultat asservi renvoyé précédemment sur l'amplificateur 101 et l'ensemble d'asservissement 102, ce multiplicateur $M_m$ renvoyant par sa première sortie le signal résultat S ainsi obtenu sur l'ensemble de contrôle et l'exploitation précédemment mentionnés et par sa deuxième sortie sur l'entrée de l'amplificateur 101.

Bien entendu, d'autres réalisations de dispositifs permettant la mise en oeuvre du procédé conforme à l'invention sont encore possibles. En particulier, de tels dispositifs peuvent permettre de réaliser un traitement initial des trames incidentes dans lequel celles-ci se verraient affecter des coefficients d'amplification variables en fonction de l'avancement du procédé.

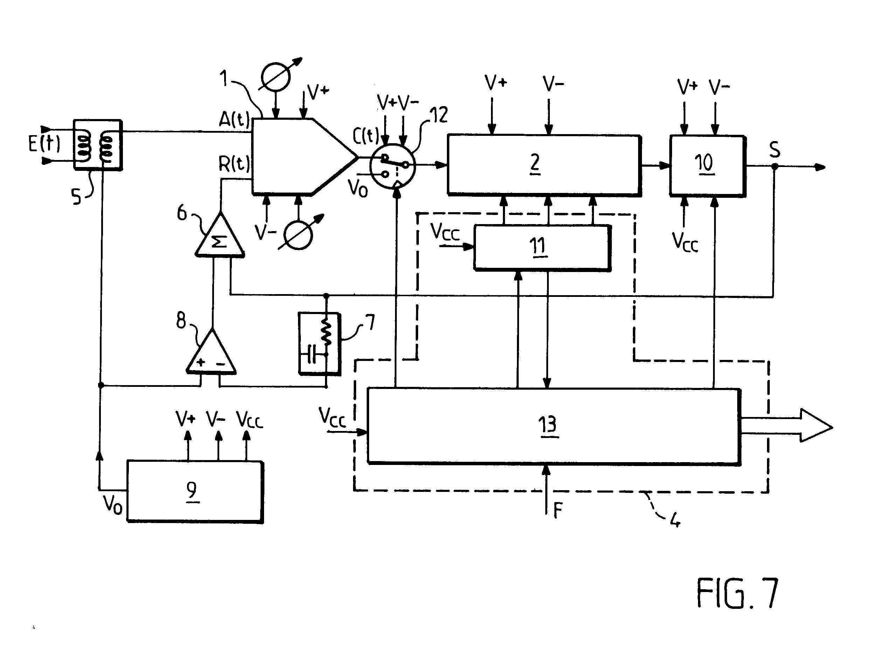

On a représenté sur la Figure 7 un schéma de détail d'un dispositif d'extraction conforme à celui qui a été schématisé sur la Figure 4 et du type analogique. Le signal d'entrée E(t) est reçu sur un transformateur jouant le rôle d'additionneur suppresseur de la composante continue et jouant le rôle d'additionneur permettant d'aligner la valeur du signal E(t) sur la valeur de la tension de polarisation $V_0$, issue d'un circuit d'alimentation 9. Le multiplieur 1 est un multiplieur analogique associé à des réglages du zéro et des réglages de pleine échelle. La mémoire de trame 2 est un registre à décalage ccd qui reçoit le signal de trame multiplié C(t) du multiplieur 1 et est associée en sortie à un circuit de mise en forme 10. Ce circuit de mise en forme 10 est lui-même relié au contrôleur 4, qui comprend un circuit de gestion 11 qui est associé à des horloges et qui commande le registre à décalage 2, ainsi qu'un circuit 13 de synchronisation des trames sur la fréquence F qui agit d'une part sur le circuit de mise en forme 10 et d'autre part sur un commutateur à bascule 12 imposant en entrée du registre à décalage 2 la tension $V_0$ de polarisation, à l'initialisation de chaque séquence de trames. On voit également que le filtre moyenneur passe-bas 7 est du type R.C., et que l'asservissement de polarisation est réalisé par un amplificateur différentiel 8, l'additionneur 6 étant un amplificateur sommateur. Le circuit 13 de synchronisation des trames sur la fréquence F ainsi que de contrôle par rapport à la base de temps est également associé en sortie d'adresses CCD 22 vers les circuits d'exploitation du signal débruité.

On a représenté sur la Figure 8 le schéma synoptique d'un télémètre à diode laser utilisant un dispositif extracteur du type qui vient d'être décrit. Le principe d'un tel télémètre consiste en l'émission d'une séquence de n impulsions lumineuses, par une source laser 15 et en la mesure du temps séparant ladite émission de la réception d'un écho, afin de pouvoir déterminer la distance séparant ledit télèmètre 14 de sa cible. C'est la détection de la crête du signal retour qui est utilisée. L'émetteur à diode laser 15 est relié à un circuit de contrôle et d'exploitation 16, comportant notamment un micro-processeur, générant les impulsions à la fréquence F.

La détection de signaux réfléchis est réalisé par une photo-diode à avalanche 17 reliée en sortie à un amplificateur 18 envoyant un signal E(t) non débruité sur un extracteur à accumulation multiplicative 19 du type défini précédemment. Cet extracteur 19 renvoie sur le circuit de contrôle et d'exploitation 16 le signal débruité S(t) et reçoit de ce circuit de contrôle et d'exploitation 16 des informations diverses et notamment la valeur de la fréquence de travail F. Les circuits 16 sont également reliés à d'autres équipements du système, comme un calculateur 20 et des moyens d'interface avec les utilisateurs 21. L'ensemble de ces différents éléments est, bien entendu, associé également à un circuit d'alimentation 22.

D'autres applications du procédé et du dispositif de l'invention sont bien entendu possibles.

Dans l'utilisation du procédé envisagée par la demanderesse, c'est la crête du signal qui est exploitée (sa position temporelle dans la trame) car elle représente, dans l'application du télémètre, l'écho de la cible dont la distance doit être mesurée.

Cependant, l'accumulation multiplicative a un effet déformant sur le signal original. En effet, les multiplications successives élèvent à la puissance N ce signal.

Dans les applications pour lesquelles il est nécessaire d'exploiter le signal sans cette distorsion d'amplitude, il y a lieu d'effectuer la transformation suivante :

$$e = \sqrt[N]{s} - V_0 \quad \text{ou} \quad e = \exp\left[\frac{\log_e s}{N}\right] - V_0$$

avec e = amplitude d'un signal noyé dans le bruit à l'entrée de l'extracteur,

et s = amplitude de ce même signal en sortie de l'extracteur en fin de séquence.

Les signes de références insérés après les caractéristiques techniques mentionnées dans les revendications ont pour seul but de faciliter la compréhension de ces dernières et n'en limitent aucunement la portée.

## Revendications

1. Procédé d'extraction d'un signal informatif, répétitif noyé dans du bruit, dans lequel on accumule plusieurs trames de signaux incidents et l'on traite les signaux de ces différentes trames pour obtenir une trame de sortie dans laquelle apparaît un signal de sortie destiné à être exploité et correspondant audit signal informatif, caractérisé en ce que l'on multiplie successivement, de façon homologue, après éventuellement traitement, une première trame incidente avec la trame incidente précédente, puis, si nécessaire, chacune des trames incidentes suivantes avec la trame résultat de la multiplication antérieure, jusqu'à obtenir une trame résultat suffisamment exploitable pour pouvoir servir de trame de sortie, les trames résultats successives étant observées et traitées pour obtenir un signal de correction introduit dans la chaîne de traitement afin d'asservir le niveau moyen du signal de ces trames résultat à une valeur de consigne du signal.

2. Procédé selon la revendication 1, caractérisé en ce que l'on asservit une trame résultat en lui additionnant une polarisation continue stabilisant la valeur moyenne du signal résultat autour d'une valeur de consigne du signal et l'on multiplie la trame asservie ainsi obtenue à une nouvelle trame incidente pour obtenir une nouvelle trame résultat.

3. Procédé selon la revendication 2, caractérisé en ce que la polarisation continue est de la forme :
$$U(t) = \alpha \times [V_0 - V_m(t)]$$
où t est l'abcisse des trames, $V_m(t)$ est la valeur moyenne du signal résultat, $V_0$ est la valeur de consigne, $\alpha$ est un coefficient d'asservissement.

4. Dispositif pour la mise en oeuvre du procédé selon l'une des revendications 1 à 3, caractérisé en ce qu'il comporte un circuit multiplieur (1) dont une première entrée reçoit les trames de signaux à traiter, une mémoire de trame (2) recevant les trames de signaux en sortie du multiplieur, un circuit d'asservissement (3) recevant les trames de signaux de la mémoire de trame (2) et renvoyant les trames de signaux asservies sur une deuxième entrée du multiplieur (1)

5. Dispositif selon la revendication 4, caractérisé en ce qu'il comprend un circuit contrôleur (4) gérant le synchronisme des opérations.

6. Dispositif selon la revendication 5, caractérisé en ce que le circuit contrôleur (4) délivre à la fin de chaque cycle le rang (i) dans la trame de sortie de l'échantillon de signal de plus forte amplitude.

7. Dispositif selon l'une des revendications 4 à 6, caractérisé en ce que le circuit d'asservissement comporte un filtre moyenneur (7) et un amplificateur différentiel (8).

8. Dispositif selon l'une des revendications 4 à 7, caractérisé en ce qu'il comporte un circuit transformateur (5) changeant la composante continue des trames de signaux d'entrée en une valeur de consigne $V_0$, ce circuit transformateur étant relié à la première entrée du circuit multiplieur.

9. Application du procédé selon l'une des revendications 1 à 3 et/ou du dispositif selon l'une des revendications 4 à 8 au traitement de signaux de réception en télémétrie laser.

10. Télémètre comportant une source (15) d'émission d'impulsions laser reliée à des moyens générateurs d'impulsion, des moyens de réception (17) desdites impulsions après réflexion de celles-ci sur une cible, des moyens de traitement (19) desdites impulsions reçues permettant le comptage du temps de propagation entre l'émission et la réception d'une impulsion, caractérisé en ce que lesdits moyens de traitement (19) comportent un dispositif selon l'une des revendications 4 à 8.

FIG. 3

FIG.1

FIG. 2

FIG.4

FIG.5

FIG.8

FIG. 6

FIG. 7

EP 0 479 649 A1

EP 0 479 649 A1

**Office européen des brevets**

**RAPPORT DE RECHERCHE EUROPEENNE**

Numero de la demande

EP    91 40 2565

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-4 233 604 (LEPERE)<br>* colonne 3, ligne 1 - ligne 32; figure 1 * | 1 | G01S7/48 |
| A | NTZ NACHRICHTECHNISCHE ZEITSCHRIFT<br>vol. 26, no. 7, Juin 1973, BERLIN DE<br>pages 324 - 327;<br>E. HAULE: 'Incoherent radar target extraction in clutter of unknown  level by recursive integration signal and threshold'<br>* paragraphe 7 * | 1 | |
| A | PROCEEDINGS OF THE INSTITUTION OF ELECTRICAL ENGINEERS.<br>vol. 102, Février 1955, STEVENAGE GB<br>pages 181 - 190;<br>D.G. TUCKER: 'Signal / noise performance of multipier (or correlation) and addition (or integrating) types of detector'<br>* paragraphe 1 * | 1 | |
| A | RADIO AND ELECTRONIC ENGINEER<br>vol. 32, no. 8, Août 1966, LONDON GB<br>pages 93 - 99;<br>V. GREGERS HANSEN: 'The detection performance for some cases of multiplicative radar signal processing'<br>* paragraphes 1,2,3.3 ; figure 1 * | 1 | **DOMAINES TECHNIQUES RECHERCHES (Int. Cl.5 )**<br><br>G01S |

Le présent rapport a été établi pour toutes les revendications

| Lieu de la recherche | Date d'achèvement de la recherche | Examinateur |
|---|---|---|
| LA HAYE | 16 DECEMBRE 1991 | AUGARDE E.P.G.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)